# EUROPEAN PATENT APPLICATION

(11) **EP 0 947 314 A2**
(43) Date of publication of application: **06.10.1999**
(21) Application number: 98250290.8
(22) Date of filing: 04.11.1991
(51) Int. Cl.: B32B 27/32, B65D 65/40

(54) **Method for packaging heat-processable items**

(30) Priority: 16.11.1990 IT 2207890
(62) Divisional of application: 91118760.7
(71) Applicant: Cryovac, Inc., Duncan, S.C. 29334-0464 (US)
(72) Inventor: Paleari, Mario, 20010 Pogliano Milanese (IT); Parnell, Colin Douglas, 21020 Casale Litta (Varese) (IT)
(74) Representative: UEXKÜLL & STOLBERG

(57) **Abstract**

Method for packaging heat processable items comprising the insertion of said item into a heat treatable container made of a multilayer film comprising at least an outer heat seal layer and a core gas barrier layer, said heat seal layer comprising polymers of propylene copolymerized with from 1 to 20% by weight of two or more alpha-olefins having from 2 to 8 carbon atoms and the gas barrier layer being selected from PVDC, EVOH polymers and their blends with further polymers; and subjecting the package to a dry or wet heat treatment.

## Description

This invention relates to a container structure, such as a bag, made of multilayer thermoplastic films, which has improved seal performance and improved heat processability properties.

In the field of packaging, multilayer thermoplastic films are being increasingly used in order to provide a balance of requested properties such as mechanical and abuse strength, gas barrier properties, attractive appearance, good optical properties and good heat seal performance.

Particularly in food packaging, a further required property is often heat-shrinkability which is provided by subjecting the film to orientation by mono- or bi-axial stretching.

Amongst the many prior art references relating to multilayer films for packaging, the following can be mentioned as of a certain interest in connection with the present invention:
U.S. Patent No. 4,495,249 issued to Ohya et al discloses a multilayer laminate film with a core layer of a hydrolysed ethylene-vinyl acetate copolymer, and two outer layers of a blend of copolymer of ethylene and vinyl acetate and a copolymer of propylene and ethylene or linear low density polyethylene. The multilayer laminate film of the reference can be made heat shrinkable and has gas barrier properties.

U.S. Patent No. 4,182,457 (Yamada et al) discloses a container with an EVOH core, adhesive layers, and additional layers of e.g. polypropylene or ethylene propylene copolymer.

U.S. Patent No. 4,511,610 (Yazaki et al) discloses a container with an EVOH core, adhesive layers, and additional layers of e.g. polypropylene or ethylene propylene copolymer.

U.S. Patent No. 4,405,667 issued to Christensen et al appears to disclose a retortable pouch having a linear low density polyethylene heat seal layer, a second layer of a blend of linear low density polyethylene and propylene ethylene copolymer, optional third, fourth, and fifth layers of propylene ethylene copolymer, a sixth layer of an anhydride modified polypropylene, a seventh layer of nylon, an eighth layer of EVOH and a ninth layer of nylon.

U.S. Patent No. 4,532,189 issued to Mueller discloses a shrinkable film having two outer layers each comprising e.g. a blend of polypropylene and ethylene propylene copolymer.

Also of interest is U.S. Patent No. 4,400,428 issued to Rosenthal et al which discloses a composite film having a biaxally oriented polypropylene based film (BOPP) laminated on at least one surface with a multilayer structure including a gas barrier layer of a hydrolyzed ethylene vinyl acetate copolymer and a layer adjacent to the base film, and a heat sealable outer layer which may be, for example, modified propylene/ethylene copolymer.

EPO Patent Application No. 0,149,321 (Ohya et al) discloses a heat shrinkable tubular film having a gas barrier layer of vinylidene chloride copolymer, outer layers of polyolefin such as ethylene propylene copolymer, polypropylene and blends thereof, at least one intermediate layer of for example a polyamide, and adhesive layers arranged between any of the above layers.

U.K. Patent Application GB 2,139,948 (Dobbie) discloses a multilayer, preferably coextruded five-layer heat sealable film having a surface layer of a heat sealable polymer such as linear low density polyethylene or LLDPE blended with other polymers such as EVA, an EVOH layer, and a layer of polypropylene. These layers can be bonded by polymeric adhesive tie layers.

U.K. Patent Application GB 2 221 649 (Okura) discloses a composite film with improved heat shrinkable properties comprising a core layer formed of a linear, low density polyethylene having a density of 0.890 to 0.905 g/cc and/or of a copolymer of propylene with one or more alpha-olefins and two outer layers formed of a crystalline polypropylene resin having a melting point of 135-150°C wherein the crystalline propylene resin may be an ethylenepropylene copolymer or an ethylene-propylene-butene copolymer.

None of such prior art references appears to relate to a multilayer thermoplastic film having improved seal performance both in cold and hot conditions as provided by the container of the present invention.

It is an object of the present invention to provide a container structure, such as a bag structure, having at least one sealed area and having improved seal performance in terms of both cold seal strength and thermal resistance.

It is another object of the present invention to provide a container structure having a unique balance of impact and abuse resistance, processability, sealability and thermal resistance.

It is a further object of the present invention to provide a container structure fit for use in heat resistant packaging.

These and further objects are achieved by a heat treatable container made of a multilayer film comprising at least an outer heat seal layer and a core gas barrier layer, said heat seal layer comprising polymers of propylene copolymerized with from 1 to 20% by weight of two or more alpha-olefins having from 2 to 8 carbon atoms.

The heat seal layer according to this invention comprises preferably a polymer of propylene polymerized with 3 to 10 % by weight of said alpha-olefins.

While a polymer of propylene with any two or more alpha-olefins having up to 8 carbon atoms can be used, a preferred polymer is a terpolymer of propylene with ethylene and butene. The weight ratio between the ethylene and butene comonomers ranges preferably from 1 to 6. A specific embodiment of the terpolymer consists, e.g., of 94/4/2 parts by weight of propylene/ethylene/butene.

In a further embodiment of this invention the heat sealing layer comprises a blend of said propylene terpolymer or higher polymer with an additional propylene copolymer, in a proportion of 99 to 50% by weight of the terpolymer and 1 to 50% by weight of the additional copolymer, said percentages being referred to the whole blend.

The additional propylene copolymer comprises from 99 to 80% by weight of propylene and from 1 to 20% by weight of a comonomer selected from alpha-olefins with 2 to 8 carbon atoms, preferably from ethylene and butene.

In most packaging applications the multilayer film of which the container of this invention is made comprises preferably, in addition to the heat seal outer layer and the gas barrier core layer, a further outer structural layer.

The gas barrier layer is made of conventional polymers with gas barrier properties such as ethylene-vinyl alcohol (EVOH) copolymers having for example an ethylene content of 30 to 47%, polyvinylidene chloride copolymers (PVDC) with vinyl chloride or methyl acrylate comonomers, or both, or polyamides or copolyamides or blends thereof with EVOH.

The outer structural layer can be made of the same propylene polymer as the heat sealing layer or of different conventional polymers known to impart mechanical strength to the film. Such polymers can be selected for instance from polyethylenes of very low density (VLDPE), of high density (HDPE) or linear low density (LLDPE); ethylene-vinyl acetate (EVA) copolymers with VA content of 2 to 30%, preferably of 6 to 12% ; ethylene copolymers with acrylic or methacrylic comonomers; ionomers; olefinic polymers and copolymers modified with functional groups; polyamides; polyesters, copolyesters; and their blends.

Examples of acrylic and methacrylic comonomers usable in such ethylene copolymers are acrylic and methacrylic acids, and alkyl acrylates and methacrylates with C1-C4 alkyl moieties such as butyl acrylate, methyl acrylate and ethyl acrylate, modified or not with functional groups, such as with anhydrides, particularly maleic anhydride. Said modified olefinic polymers and copolymers can be selected from EVA, polyethylene and polypropylene, while said polyamides can be selected from Nylon 6, Nylon 6-66, Nylon 6-12 and Nylon 6-69.

As an ionomeric polymer the one available from E.I. duPont de Nemours (USA) under the trademark Surlyn, can be used.

The multilayer films of which the containers of the invention are made are preferably produced by simultaneous or sequential coextrusion of the various component layers with interposition therebetween of adhesive tie layers. For producing tie layers, conventional polymers known for such uses can be employed such as for instance ethylene polymers and copolymers modified or not with functional groups, in particular anhydride modified ethylene copolymers. Illustrative of such polymers and copolymers are EVA copolymers modified by functional groups and having a VA content of 6 to 25% by weight; polyethylene and polypropylene polymers modified by functional groups; LLDPE; VLDPE; copolymers of ethylene-butyl acrylate (EBA), ethylene-methyl acrylate (EMA), ethylene-methacrylic acid (EMAA) or ethylene-acrylic acid (EAA); ionomers; modified or not with functional groups; and blends thereof.

Preferably the multilayer film making up the container structure of this invention comprises an at least 5-layer structure of the following type:
Seal/Tie/Barrier/Tie/Structural

Typically, the multilayer film used in the present invention comprises a structure like the following one:

Seal/Inner Structural/Tie/Barrier/Tie/Outer Structural wherein the inner and outer structural layers can be the same or different and are selected from the polymers mentioned above for the outer structural layer.

The container of this invention is prepared by providing first the multilayer film, by lamination, or preferably by coextrusion in a tubular form. When using this latter technique either all layers are coextruded and then whole multilayer film is cross-linked by irradiation, using conventional irradiation techniques, or first a substrate comprising some of the layers is coextruded, then it is irradiated in order to cross-link these layers and finally a coating is extruded on the cross-linked substrate. Another alternative is that of cross-linking the whole structure after orientation.

Thus, according to a specific embodiment, a substrate can be first formed by coextruding the heat sealant with an inner structural layer and optionally with a first tie layer, then this substrate is subjected to cross-linking by irradiation and finally a coating is extruded over the cross-linked substrate comprising the remaining layers such as a second (optional) tie /barrier/third tie/outer structural layer. The various adhesive tie layers can be the same or different depending also on the nature of the layers to be adhered therewith.

When preparing heat shrinkable bags, the coextruded tubular multilayer film obtained as stated above is then subjected to orientation by mono- or bi-axial stretching in the machine direction or transversally thereto, or both by well known stretching techniques. For instance the bi-axial stretch is performed by the "air-bubble" blowing method, on-line or off-line of the extrusion process.

Thereafter bags are formed by cutting lengths of the tubular film and sealing such lengths transversely to the axial direction of the tubular film so providing bags with a bottom seal, or providing bags with two side seals.

It is to be noted that these latest bags with side seals are not obtainable with industrial processing equipment from conventional multilayer films having seal layers different from those according to the present invention because of the poor processing performance of such conventional sealing layers.

The layers according to this invention show outstanding properties in terms of cold and heat seal strength. Thus, when such bags are used in food packaging applications, the food item is inserted in the bag, the pack is vacuumized and then closed by heat sealing or clipping and then, the package as a whole can be subjected to various heat treatments such as cooking at a temperature up to about 85°C for several hours , say 5-6 hours, or pasteurization treatment at 95-100°C for about 1/2 to 1 hour. The bags stand such treatments without revealing damages or weakening of the seal or damages to the integrity of the whole pack for example by delamination. These properties are very important in preserving the integrity of the packed food which otherwise, in the presence of damaged bags, should be discarded. Furthermore, the packages made with the bags of this invention stand without breaking or damages of the sealed area electrical "corona" treatment aimed at improving the bag adhesion to the food surface, in particular when meat is being packed, so as to better preserve the packed food and improve appearance of the package.

The examples which follow are intended as purely illustrative of the performances shown by the inventive bags.

### Example 1

A multilayer film for producing bags according to this invention and a control multilayer film have been prepared by simultaneous coextrusion of all the respective layers in tubular form and subsequent cross-linking of the coextruded film by irradiation. The two films have the following structure:
Control:
Sealing 1/EVA 1/Tie/EVOH/Tie/EVA 2
Film of this invention:
Sealing 2/EVA 1/Tie/EVOH/Tie/EVA 2
wherein:
- Sealing 1:: is a copolymer of 96.5 pbw Propylene and 3.5 pbw Ethylene
- Sealing 2:: is a terpolymer of 94/4/2 Propylene/Ethylene/ Butene
- EVA 1 :: is an inner structural layer with a VA content of 12% by weight
- EVA 2 :: is an outer structural layer with a VA content of 6% by weight
- Tie :: is an EVA copolymer with a VA content of 14 % and modified with maleic anhydride
Typical physical and mechanical properties of the two films are reported in table 1.

**TABLE 1**

| PHYSICAL - MECHANICAL PROPERTIES | | | |
|---|---|---|---|
| | | CONTROL | FILM OF THIS INVENTION |
| = THICKNESS (microns) (ASTM D-374) | | 60 | 60 |
| = TENSILE STRENGTH (KG/cm²) (ASTM D-882) | MD | 400 | 420 |
| | TD | 430 | 450 |
| = ELONGATION (%) | MD | 160 | 190 |
| (ASTM D-882) | TD | 120 | 130 |
| = SHRINK (%) (by immersion at | MD | 23 | 24 |
| 85°C for 5') | TD | 33 | 32 |
| = OXYGEN PERMEABILITY (cm³/24h m² bar) (ASTM D 3985) | | 10 | 10 |
| MD = Machine Direction | | | |
| TD = Transverse Direction | | | |

The tubular films have been converted into 300 x 500 mm bags having each a bottom seal. 75 bags of each type of multilayer film have been tested for cold seal strength by measuring the burst resistance at room temperature of the bags as prepared and after ageing for two weeks. The results, as an average value of the water pressure at burst in inches, are given in the following table 2.

**Table 2**

| Burst resistance (iowp) | | |
|---|---|---|
| | As prepared | After ageing |
| Control | 137 | 113 |
| EX.1 | 156 | 138 |

Furthermore, the heat seal strength of these bags has been also measured by immersing the seal in a hot water bath at 85°C and then applying internal pressure until burst occurs. The bags made of the inventive film and those of the control film showed comparably good heat seal resistence.

### Example 2

The inventive and control bags of Example 1 have been used in cooking and pasteurization tests the result whereof are reported in the following Tables 3 and 4.

**Table 3**

| COOKING TEST | | | |
|---|---|---|---|
| Products: 5 cooked ham cuts | | | |
| TEMPERATURES TIME | TOTAL COOKING TIME (hours) | CONTROL (Corona treated) 300mm WIDE | EX 1 (corona treat.) 300mm WIDE |
| 95°C X 5h | 5 | OK | OK |
| 90°C x 1 h | 6 | OK | OK |
| 95°C X 1 h | 7 | REJECT | OK |
| 95°C X 2 h | 3 | REJECT | OK |
| NEXT MORNING | 16 | 2 REJECTS | 1 REJECT |

**Table 4**

| PASTEURIZATION TEST | | | |
|---|---|---|---|
| Products: 5 cooked ham cuts. | | | |
| TEMPERATURES - TIME | TOTAL COOKING TIME (hours) | CONTROL 300mm WIDE | EX 1 300mm WIDE |
| 95°C X 10' | 0,5 | OK | OK |
| 95°C X 4 h | 4 | OK | OK |
| 100°C X 10' | 4h + 10' | REJECT | OK |
| 100°C X 1 h | 5 | - | OK |
| 100°C X 2 h | 6 | - | 1 REJECT |
| 100°C X 3 h | 7 | - | 3 REJECTS |

As it can be noted the bags of this invention have a better performance at higher temperatures and/or for prolonged treatment times, by maintaining the integrity of the pack.

### Example 3

The control and inventive bags of Example 1 after having been submitted to corona discharge treatment have also been subjected to a "meat adhesion" test: the corona treatment improves in fact the adhesion of the bags onto the packed meat so improving product presentation and packaging appearance.

The bags with inserted meat cuts have been heat treated at 70°C for 90' and finally tested by measuring the strength requested to tear off a strip of 25mm cut from the bag adhered on the meat from contact with the meat. The results shown in Table 5 indicate the improved performance of the inventive bags.

**Table 5**

| **MEAT ADHESION** (g/25mm) | |
|---|---|
| Ex. 1 | Control |
| 16.9 | 13.3 |
| 32.3 | 20.6 |
| 25.0 | 16.4 |
| 22.5 | 22.2 |
| 19.6 | 11.5 |
| Avg. 23.26 | 16.8 |

## Claims

1. A method for packaging heat processable items comprising the insertion of said items into a heat treatable container made of a multilayer film comprising at least an outer heat seal layer and a core gas barrier layer, said heat seal layer comprising polymers of propylene copolymerized with from 1 to 20% by weight of two or more alpha-olefins having from 2 to 8 carbon atoms; and subjecting the package to a dry or wet heat treatment.

2. The method of claim 1 wherein the heat seal layer comprises polymers of propylene copolymerized with 3 to 10% by weight of said two or more alpha-olefins.

3. The method of claim 1 or 2 wherein said heat seal layer comprises terpolymers of propylene with ethylene and butene.

4. The method of claim 1 wherein said heat seal layer comprises a blend of 99 to 50% by weight of said popylene polymers with 1 to 50% by weight of at least an additional propylene copolymer with a comonomer selected from alpha-olefins having from 2 to 8 carbon atoms.

5. The method of claim 4 wherein said additional propylene copolymer comprises from 1 to 20% by weight of said alphaolefin comonomers.

6. The method of claim 4 or 5 wherein said additional propylene copolymer comprises a comonomer selected from ethylene and butene.

7. The method of claim 1 wherein said gas barrier layer is selected from PVDC and EVOH polymers, and their blends with further polymers.

8. The method of claim 1 wherein said container is made of a multilayer film comprising at least a said heat seal layer, a said core gas barrier layer, and a further outer structural layer.

9. The method of claim 8 wherein the container comprises said further outer layer selected from said polymers of propylene copolymerized with from 1 to 20% by weight of two or more alpha olefins having from 2 to 8 carbon atoms, polyethylenes of very low density (VLDPE), of high density (HDPE) and linear low density (LLDPE), ethylene-vinyl acetate (EVA) copolymers with VA content of 2 to 30%, ethylene copolymers with acrylic and methacrylic comonomers, ionomers, olefinic polymers and copolymers modified with functional groups, polyamides, polyesters, copolyesters, and their blends.

10. The method of claim 9 wherein said acrylic and methacrylic comonomers are selected from acrylic and methacrylic acids, and alkyl acrylates and methacrylates with C₁-C₄ alkyl moieties, modified or not with functional groups; said modified olefinic polymers and copolymers are selected from modified EVA, polyethylene and polypropylene; and said polyamides are selected from Nylon 6, Nylon 6-66, Nylon 6-12 and Nylon 6-69.

11. The method of claim 8 wherein said container further comprises adhesive layers interposed between said outer and core layers which are selected from ethylene polymers and copolymers, modified or not with functional groups.

12. The method of claim 1 or 8 wherein the container is made of said multilayer film provided in a tubular form and having a bottom seal transverse to the axial dimension of said tubular film.

13. The method of claim 1 or 8 wherein the container is made of said multilayer film provided in a tubular form and having two side seals parallel to the axial dimension of said tubular film.

14. The method of any one of the preceding claims wherein said container has been made heat-shrinkable by at least a monoaxial stretching of said multilayer film.

15. The method of any one of the preceding claims wherein said multilayer film has at least one layer which has been cross-linked.

16. The method of claim 15 wherein said multilayer film is fully cross-linked by irradiation.

17. The method of any one of claims 12 to 16 wherein said heat seal layer has been corona treated for imparting protein adhesion properties thereto.

18. Use of polymers of propylene copolymerized with from 1 to 20% by weight of two or more alpha-olefins having from 2 to 8 carbon atoms, for producing a heat sealing outer layer in a multilayer heat treatable container.

19. Use according to claim 18 of terpolymers of propylene with ethylene and butene.
